# EUROPÄISCHE PATENTSCHRIFT

(11) **EP 1 616 613 B1**
(45) Veröffentlichungstag und Bekanntmachung des Hinweises auf die Patenterteilung: **09.12.2009**
(21) Anmeldenummer: 05014923.6
(22) Anmeldetag: 09.07.2005
(51) Int. Cl.: B01D 45/14, B23Q 11/00, B23Q 11/08

(54) **Vorrichtung und Verfahren zum Abscheiden von aerosolhaltigen, von einer mit Kühlschmierstoffen betreibbaren Werkzeugmaschine kommenden Gasgemischen**
Device and process for the separation of aerosols from a gas mixture exhausted from a machine tool using lubricants
Dispositi et procédé pour séparer des aérosols contenus dans des gaz issus d'une machine-outil utilissant des lubrifiants

(30) Priorität: 13.07.2004 DE 202004011113 U
(43) Veröffentlichungstag der Anmeldung: 18.01.2006
(73) Patentinhaber: Leithner, Hans Joachim, 74214 Schöntal (DE)
(72) Erfinder: Christian, Paul, 74177 Bad Friedrichshall-Untergriesheim (DE)
(74) Vertreter: Müller, Hans

(56) Entgegenhaltungen:
- DE-A1- 3 702 765
- DE-U1- 20 308 434
- GB-A- 1 289 002
- US-A1- 2003 000 185
- PATENT ABSTRACTS OF JAPAN Bd. 2000, Nr. 13, 5. Februar 2001 (2001-02-05) & JP 2000 279839 A (KURIMOTO LTD), 10. Oktober 2000 (2000-10-10)
- PATENT ABSTRACTS OF JAPAN Bd. 2000, Nr. 03, 30. März 2000 (2000-03-30) & JP 11 333723 A (FANUC LTD), 7. Dezember 1999 (1999-12-07)

## Beschreibung

Die Erfindung betrifft eine Vorrichtung und ein Verfahren zum Abscheiden von aerosolhaltigen Gasgemischen, die von einer mit Kühlschmierstoffen betriebenen Werkzeugmaschine kommen.

Die Kühlschmierstoffe werden beispielsweise bei der spanenden oder spanlosen Metallbearbeitung verwendet, um die bei dieser Metallbearbeitung bei den Werkzeugen und Werkstücken entstehende Wärme abzuführen. Außerdem dienen diese Kühlschmierstoffe auch zur Schmierung der Werkzeuge beziehungsweise Werkstücke.

### STAND DER TECHNIK

Aus der DE 195 02 529 B4 ist es bekannt, die von einer mit Kühlschmierstoffen betriebenen Werkzeugmaschine kommenden Gasgemische über einen Koaleszierer zu führen. An dem eine sehr große metallische Oberfläche aufweisenden Koaleszierer sollen sich die in dem Gasgemisch vorhandenen Ölbestandteile abscheiden und längs des Koaleszierers abfließen. Solche Ölabscheider sind in vielfältigen Ausführungen bekannt. Beispielhaft wird auf die DE 199 60 596 C2 verwiesen.

Bei solchen Gasgemischen kann es unter ungünstigen Verhältnissen zu einem Brand, einer Verpuffung oder einer Explosion kommen, so dass entsprechende Werkzeugmaschinen regelmäßig von Umhausungen umgeben werden. Aufgrund der bei dem Betrieb der Werkzeugmaschine entstehenden Wärme entsteht innerhalb der Umhausung eine waschküchenartige Atmosphäre, die beim nicht zu vermeidenden Beschicken der Werkzeugmaschine durch die geöffnete Umhausung nach außen entweichen kann.

Ausgehend von diesem vorbekannten Stand der Technik liegt der Erfindung die Aufgabe zugrunde, eine wirksame Abreinigung der von einer mit Kühlschmierstoffen betreibbaren, in einer Umhausung befindlichen Werkzeugmaschine kommenden Gasgemische zu schaffen.

Diese Erfindung ist für die erfindungsgemäße Vorrichtung durch die Merkmale des Patentanspruchs 1 und für das mit dieser Vorrichtung durchzuführende erfindungsgemäße Verfahren durch den Patentanspruch 17 gegeben. Sinnvolle Weiterbildungen der Erfindung sind Gegenstand von sich daran jeweils anschließenden weiteren Ansprüchen.

Die Erfindung verwendet zur Ölabscheidung nicht die im Stand der Technik bekannten Koaleszierer, sondern nutzt das aus Ölabscheidern an sich bekannte Prinzip, dass sich durch Rotation ungleich schwere Bestandteile voneinander trennen lassen. So werden erfindungsgemäß die beim Betrieb der Werkzeugmaschine entstehenden Gasgemische angesaugt, diese angesaugte Luftmenge kontinuierlich in Rotation versetzt, so dass bei der dann entstehenden Gaswalze die Ölbestandteile von den Gasbestandteilen, wie beispielsweise den Luftbestandteilen, getrennt werden können. Die dabei abgeschiedenen Ölbestandteile (Schmierstoffbestandteile) können einem Schmierstoffspeicher, aus dem heraus die in der Umhausung vorhandene Werkzeugmaschine mit Kühlschmierstoffen versorgt wird, wieder zugeführt werden.

Zum Ansaugen und zum anschließenden Versetzen eines Gasgemisches in eine rotative Bewegung, also zum Erzeugen einer Gaswalze, kann ein Gebläserad eingesetzt werden, wie es dem Grunde nach aus der DE 203 08 434 U1 bekannt ist.

Bei dem Trennvorgang der Ölbestandteile und der Luftbestandteile wird die von den Ölbestandteilen befreite Abluft vorzugsweise wieder in die unmittelbare Umgebung der Werkzeugmaschine zurückgeführt. Die Druckverhältnisse im Inneren der Umhausung ändern sich durch den Abscheidevorgang folglich nicht.

Um das in der Umhausung vorhandene Gasgemisch ansaugen zu können, braucht nicht die gesamte Abscheidevorrichtung, sondern nur deren Gasgemisch-Ansaugstutzen in das Innere der Umhausung hineinzuragen.

Die Wärmeverhältnisse innerhalb der Umhausung und die durch den motorischen Antrieb der Abscheidevorrichtung entstehende Abwärme beeinflussen sich dadurch nicht gegenseitig.

Einzelheiten für das bei der Abscheidevorrichtung vorhandene Gebläserad können dem nachstehend erläuterten Ausführungsbeispiel entnommen werden. Weitere Ausgestaltungen und Vorteile der Erfindung sind den in den Ansprüchen ferner aufgeführten Merkmalen sowie dem in der Zeichnung dargestellten Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine schematische Darstellung einer erfindungsgemäßen Abscheidevorrichtung für eine in einer Umhausung befindliche, mit Kühlschmierstoffen betriebenen Werkzeugmaschine,
- Fig. 2: einen Schnitt durch denjenigen Bereich der erfindungsgemäßen Abscheidevorrichtung, in dem das Gasgemisch angesaugt und anschließend in Rotation gebracht wird.

### WEGE ZUM AUSFÜHREN DER ERFINDUNG

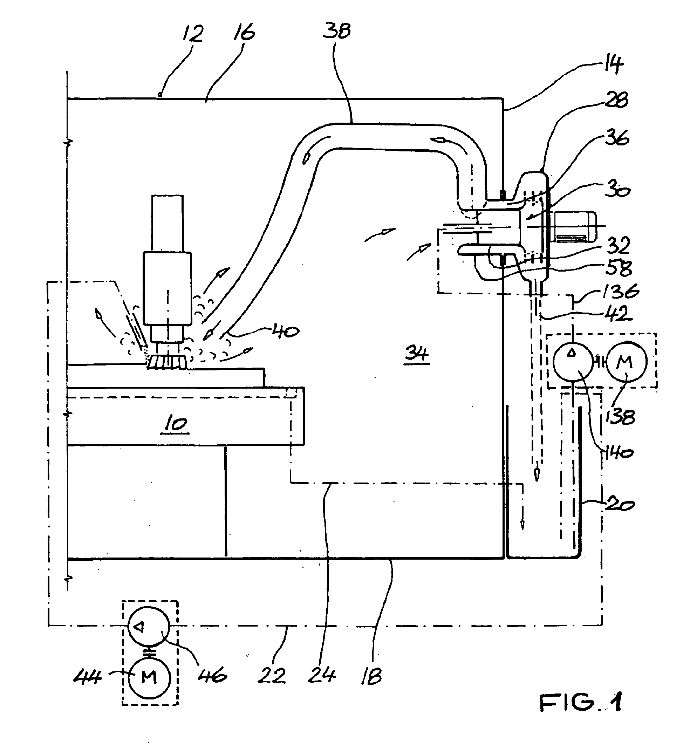

Eine Werkzeugmaschine 10 wird in einer Umhausung 12 eingekapselt betrieben. Die Werkzeuge der Werkzeugmaschine werden mit Kühlschmierstoffen gekühlt. Die Umhausung 12 besitzt Seitenwände, von denen in Fig. 1 eine rechte Seitenwand 14 und die die Seitenwände miteinander oben verschließende Decke 16 dargestellt sind. Die Seitenwände 14 stehen auf einem Boden 18 einer beispielsweise Fabrikationshalle. Auf dem Boden 18 ist auch die Werkzeugmaschine 10 aufgeständert.

Die Werkzeugmaschine 10 wird mit Kühlschmierstoffen betrieben, die in einem Speicher 20, der im vorliegenden Beispielsfall außerhalb der Umhausung 12 angeordnet ist, vorrätig gehalten werden. So führt eine Zulaufleitung 22 zum Werkzeug und Werkstück der Werkzeugmaschine 10. Von der Werkzeugmaschine 10 führt eine Rückleitung 24 für die Kühlschmiermittel in den Speicher 20 zurück.

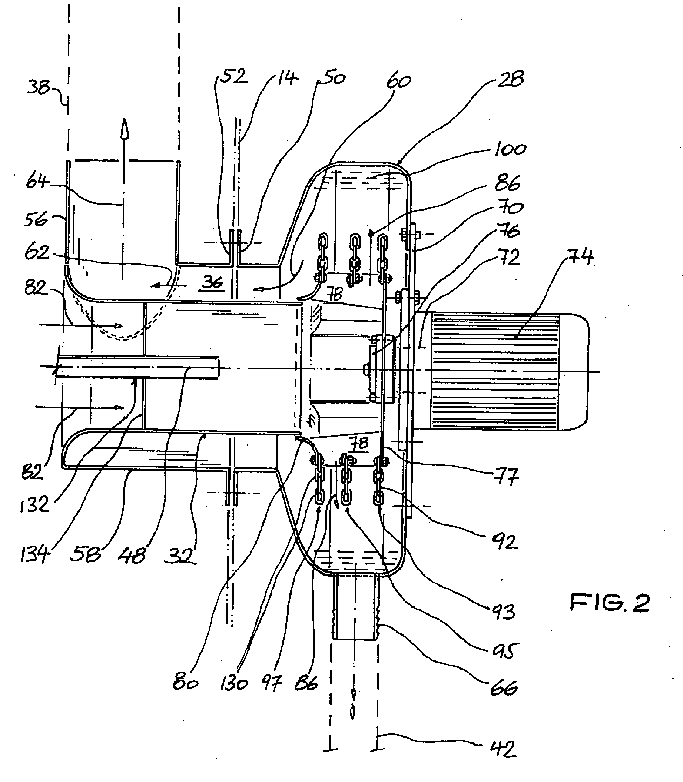

In der - in Fig. 2 - rechten Seitenwand 14 ist innerhalb eines Gehäuses 28 ein Gebläserad 30 vorhanden. Das Gebläserad 30, das nachstehend noch näher beschrieben wird, ragt mit einem Ansaugstutzen 32 in den Innenraum 34 der Umhausung 12 hinein. Zwischen dem Ansaugstutzen 32 und dem Gehäuse 28 ist ein rohrartiger Zwischenraum 36 ausgebildet. An diesen Zwischenraum 36 schließt eine Rückleitung 38 für die das Gebläserad 30 und damit das Gehäuse wieder verlassende Abluft an. Diese Rückleitung 38 verläuft im Innenraum der Umhausung 12. Ihr Leitungsende 40 liegt in unmittelbarer Nachbarschaft der Werkzeugmaschine 10 und dabei im vorliegenden Beispielsfall in unmittelbarer Nachbarschaft von Werkstück und Werkzeug dieser Werkzeugmaschine 10.

Aus dem Gehäuse 28 führt eine Rückleitung 42 für die Kühlschmierstoffe in den Speicher 20 hinein. Diese Rückleitung 42 ist außerhalb der Umhausung 12 vorhanden.

Aus dem Speicher 20 werden die dort befindlichen Kühlschmierstoffe mittels einer durch einen Motor 44 angetriebenen Pumpe 46 durch die Zulaufleitung 22 hindurch der Werkzeugmaschine 10 zugeführt.

Das Gehäuse 28 ist mittels eines ringförmigen Flansches 50 an der Seitenwand 14 befestigt (Fig. 2). Innerhalb des konzentrisch um die Systemachse 48 verlaufenden Flansches 50 ist ein Ansaugstutzen 54 vorhanden, der ebenfalls über einen ringförmigen Flansch 52 an der Seitenwand 14 befestigt ist. Das Gehäuse 28 ist damit mittels des ringförmigen Flansches 50 an der Außenseite der Seitenwand 14 und mittels des ringförmigen Flansches 52 an der Innenseite dieser Seitenwand 14 befestigt. Die Abluft-Rückleitung 38 ist an einem Abluftrohr 56 befestigt. Dieses Abluftrohr 56 schließt sich einerseits gasdicht an den Ansaugstutzen 32 und an ein Außenrohr 58 an. Ansaugstutzen 32 und Außenrohr 58 umgeben die Systemachse 48 konzentrisch. Zwischen dem Ansaugstutzen 32 und dem Außenrohr 58 beziehungsweise den Flanschen 50, 52 ist der Zwischenraum 36 ausgebildet, in den die aus dem Gebläserad 30 herausgetriebene Abluft in Richtung der Pfeile 60, 62 hineinströmt beziehungsweise durch denselben hindurchströmt und - im vorliegenden Beispielsfall - rechtwinklig zur Systemachse 48 aus dem Abluftrohr 56 in Richtung des Pfeils 64 austritt und in die Rückleitung 38 hineinströmt.

Auf der - im vorliegenden Beispielsfall - Unterseite des Gehäuses 28 ist ein Schlauchnippel 66 angeformt. An diesem Schlauchnippel 66 ist die Kühlschmierstoff-Rückleitung 42, die in Fig. 2 gestrichelt dargestellt ist, angeschlossen.

Das Gehäuse 28 besitzt auf seiner Rückseite eine Öffnung, die durch eine Platte 70 abgedeckt ist. Die Platte 70 besitzt eine zentrische Öffnung, durch die die Abtriebswelle 72 eines außerhalb des Gehäuses 28 vorhandenen Drehstrommotors 74 in das Innere des Gehäuses 28 hineinragt. An der Abtriebswelle 72 ist drehfest eine Nabe 76 befestigt.

An dieser Nabe 76 ist eine Tragscheibe 77 befestigt. An dieser Tragscheibe 77 sind umfangsmäßig verteilt Schaufeln 78 befestigt. Auf dem zur Tragscheibe 77 entgegengesetzten Ende der Schaufeln 78 sind dieselben durch eine einen Einlauftrichter bildende Deckscheibe 80 miteinander verbunden. Die Tragscheibe 77, die Deckscheibe 80 und die dazwischen befestigten Schaufeln 78 stellen zusammen mit der Nabe 76 das Gebläserad 30 eines Radialventilators dar. Durch den Motor 74 kann dieses Gebläserad 30 in Rotation gebracht werden. Bei dieser Rotation wird durch den Ansaugstutzen 32 das in der Umhausung vorhandene Gasgemisch längs der Pfeile 82 in das Innere des Ventilators eingesaugt. Dieses Gasgemisch verlässt die Schaufeln 78 in radialer Richtung (Pfeile 86).

An dem Umfang der Tragscheibe 77 sind gleichmäßig verteilt mehrere Elemente 92 mittels einer Verschraubung gelenkig befestigt. Die an der Tragscheibe 77 befestigten mehreren Elemente 92 bilden gemeinsam einen Kranz 93.

Ein zum Kranz 93 vergleichbarer Kranz 95 von solchen Elementen 92 ist auch im Bereich der Schaufeln 78 vorhanden. So sind Elemente 92 des Kranzes 95 etwa in halber Höhe der Schaufeln 78 - ebenfalls gelenkig - befestigt. Beim Rotieren der Schaufeln 78 um die Systemachse 48 richten sich die Kränze 93, 95 etwa in die in Fig. 1 und 2 dargestellte Position aus.

Ein weiterer Kranz 97 von Elementen 92 ist an der Deckscheibe 80 befestigt. Die Befestigung ist, wie bei den anderen Kränzen, durch eine Verschraubung hergestellt.

Durch die Elemente 92 beziehungsweise durch die Kränze 93, 95,97 wird das entlang der Pfeile 86 verlassende Gasgemisch in eine Gaswalze 100 überführt. Diese Gaswalze 100 ist symbolhaft mit gestrichelten Linien dargestellt. Diese Gaswalze 100 stellt eine rotierende Gasgemisch-Walze dar. Aufgrund der Schwerkraft sammeln sich die gegenüber der Luft schwereren Ölbestandteile beziehungsweise Ölschmierstoff-Bestandteile an der radialen Außenseite, das heißt auf der Innenseite des Gehäuses 28. Diese Kühlschmierstoffe können dann durch den Schlauchnippel 66 das Gehäuse 28 verlassen und durch die Schmierstoff-Rückleitung 42 in den Speicher 20 zurückfließen. Die in der Gaswalze 100 vorhandenen Luft- beziehungsweise Gasbestandteile strömen entlang der Pfeile 60, 62, 64 aus dem Abluftrohr 56 heraus und werden durch die Rückleitung 38 wieder in den Bereich der Werkzeugmaschine 10 zurückgeführt. Diese zurückgeführte Abluft ist weitestgehend von den Kühlschmierstoffen befreit.

Jedes der Elemente 92 des Gebläserades 30 besteht aus gelenkig aneinander hängenden Ösen 130. Die Ösen 130 eines Elementes 92 stellen ein Kettenglied dar.

Bei allen Kränzen sind die Elemente 92 abströmseitig der jeweiligen Schaufeln 78 vorhanden. Die Elemente 92 sind in dem noch die Kühlschmierstoffe enthaltenden Gasgemisch vorhanden. Die Trennung erfolgt im Bereich der Gaswalze 100, die sich in dem radialen Bereich zwischen dem Gehäuse 28 und den Kränzen 93, 95, 97 einstellt.

Während das Gebläserad 30 die gewünschte Luftströmung in den Bereich der Schaufeln 78 hinein und aus dem Bereich der Schaufeln wieder heraus erzeugt, bewirken die abströmseitig des Gebläserades 30 angeordneten Elemente 92 die Ausbildung der Gaswalze 100.

Um ein Trockenlaufen des Gebläserades 30 zu vermeiden, was beispielsweise während der ersten Betriebsphase der Werkzeugmaschine, wo noch wenig Kühlschmierstoffe verbraucht sind, eintreten könnte, können im vorliegenden Beispielsfall zusätzliche Kühlschmierstoffe in das Gebläserad eingeleitet werden. Dazu mündet ein Leitungsrohr 132 zentral von außen in den Ansaugstutzen 54 hinein, an dem es mit Radialstegen 134 befestigt ist. Das Leitungsrohr 132 ist über eine Leitung 136 mit dem Speicher 20 verbunden. Aus dem Speicher 20 können so bei Bedarf Kühlschmierstoffe mittels einer durch einen Motor 138 angetriebenen Pumpe 140 in das Gebläserad 30 hineingeleitet werden.

Das Gehäuse 28 mit dem Gebläserad 30 können nicht nur in waagerechter Anordnung - wie in der Zeichnung dargestellt - sondern auch in beliebiger anderer, auch senkrechter Ausrichtung an der Umhausung 12 vorhanden sein. Ihr Einbau kann also auch beispielsweise in der Decke 16 vorgesehen werden.

## Patentansprüche

1. Vorrichtung zum Abscheiden von aerosolhaltigen, von einer mit Kühlschmierstoffen betreibbaren Werkzeugmaschine (10) kommenden Gasgemischen, wobei die Werkzeugmaschine (10) mit einer Umhausung (12) versehen ist,
- mit einer ersten Rückleitung (42) für aus dem Gasgemisch ausgeschiedene Kühlschmierstoffe,
- und mit einem von einem Gehäuse (28) umgebenes Gebläserad (30) für Gase , welches Schaufeln (78) besitzt,
- **dadurch gekennzeichnet, dass**
- das in dem von der Umhausung (12) umschlossenen Innenraum (34) vorhandene Gasgemisch durch das Gebläserad (30) ansaugbar ist,
- zumindest ein aus mehreren gegenseitig beweglichen Gliedern bestehendes Element (92) im vom Gebläserad erzeugten Volumenstrom vorhanden ist,
- dieses zumindest eine Element (92) um die Rotationsachse (48) des Gebläserades rotierbar antreibbar ist,
- eine zweite Rückleitung (38) für die das Gehäuse (28) verlassende Gasströmung zwischen dem Gehäuse (28) und dem Innenraum (34) vorhanden ist.

2. Vorrichtung nach Anspruch 1,
- **dadurch gekennzeichnet, dass**
- das Gehäuse (28) mit einem Ansaugstutzen (32) für das Gasgemisch in den Innenraum (34) hineinragt.

3. Vorrichtung nach Anspruch 1 oder 2,
- **dadurch gekennzeichnet, dass**
- die erste Rückleitung (42) in einen Schmierstoffspeicher (20) einmündet, aus dem heraus die in der Umhausung (12) vorhandene Werkzeugmaschine (10) mit Kühlschmierstoffen versorgbar ist.

4. Vorrichtung nach Anspruch 3,
- **dadurch gekennzeichnet, dass**
- die erste Rückleitung (42) außerhalb der Umhausung (12) vorhanden ist.

5. Vorrichtung nach einem der vorstehenden Ansprüche,
- **dadurch gekennzeichnet, dass**
- die zweite Rückleitung (38) bei der in der Umhausung (12) vorhandenen Werkzeugmaschine (10) endet.

6. Vorrichtung nach Anspruch 5,
- **dadurch gekennzeichnet, dass**
- die zweite Rückleitung (38) innerhalb der Umhausung (12) vorhanden ist.

7. Vorrichtung nach einem der vorstehenden Ansprüche,
- **dadurch gekennzeichnet, dass**
- der Antriebsmotor (74) für das Gebläserad außerhalb der Umhausung (12) vorhanden ist.

8. Vorrichtung nach einem der vorstehenden Ansprüche,
- **dadurch gekennzeichnet, dass**
- das Gebläserad mit seinen Schaufeln (78) in Art eines Radialventilators ausgebildet ist,
- Elemente (92) an den Schaufeln (78) und/oder an der Tragscheibe (77) und/oder an der Deckscheibe (80), zwischen welchen zwei Scheiben (77, 80) die Schaufeln (78) vorhanden sind, befestigt sind.

9. Vorrichtung nach einem der vorstehenden Ansprüche,
- **dadurch gekennzeichnet, dass**
- Elemente (92) am äußeren Umfangsrand der Tragscheibe (77) und/oder am äußeren Umfangsrand der Deckscheibe (80) befestigt sind.

10. Vorrichtung nach einem der vorstehenden Ansprüche,
- **dadurch gekennzeichnet, dass**
- die Elemente (92) in Rotations-Umfangsrichtung verteilt, insbesondere gleichmäßig verteilt vorhanden sind.

11. Vorrichtung nach einem der vorstehenden Ansprüche,
- **dadurch gekennzeichnet, dass**
- die Elemente (92) gelenkig angehängt sind.

12. Vorrichtung nach einem der vorstehenden Ansprüche,
- **dadurch gekennzeichnet, dass**
- Elemente (92) jeweils aus mehreren, nach Art von Kettenstücken mit gegenseitiger Beweglichkeit aneinandergehängten Gliedern bestehen.

13. Vorrichtung nach einem der vorstehenden Ansprüche,
- **dadurch gekennzeichnet, dass**
- die Elemente (92) zu einem oder zu mehreren Kränzen (93, 95, 97) angeordnet sind, wobei jeder Kranz aus mehreren Elementen (92) besteht.

14. Vorrichtung nach einem der vorstehenden Ansprüche,
- **dadurch gekennzeichnet, dass**
- zumindest ein Element (92) aus flachen Ösen (130) besteht, die ineinandergehängt sind und die, bezogen auf ihre Flächenausdehnung, um 90° (Altgrad) gegenüber den jeweils benachbarten Ösen (130) verdreht vorhanden sind.

15. Vorrichtung nach einem der vorstehenden Ansprüche,
- **dadurch gekennzeichnet, dass**
- ein Leitungsrohr (132) von außen in den Ansaugstutzen (32) hineinragt,
- durch das Leitungsrohr (132) Kühlschmierstoffe oder sonstige Flüssigkeiten in das Gebläserad (30) einleitbar sind.

16. Vorrichtung nach Anspruch 15,
- **dadurch gekennzeichnet, dass**
- das Leitungsrohr (132) mit dem Speicher (20) für Kühlschmierstoffe verbunden ist.

17. Verfahren zum Abscheiden von aerosolhaltigen, das mit der Vorrichtung gemäß Anspruch 1 durchgeführt wird von einer mit Kühlschmierstoffen betriebenen Werkzeugmaschine (10) kommenden Gasgemischen, wobei die Werkzeugmaschine (10) mit einer Umhausung (12) versehen ist und das im Innenraum (34) der Umhausung (12) befindliche Gasgemisch angesaugt wird,
- **dadurch gekennzeichnet, dass**
- dieses angesaugte Gasgemisch in eine rotierende Gaswalze (100) gebracht wird, so dass dadurch die Kühlschmierstoffbestandteile von den Gasbestandteilen des angesaugten Gasgemisches getrennt werden,
- diese Gasbestandteile wieder in den Bereich der Werkzeugmaschine (10) zurückgeführt werden.

18. Verfahren nach Anspruch 17,
- **dadurch gekennzeichnet, dass**
- die durch Rotation erhaltenen Kühlschmierstoffbestandteile wieder zum Versorgen der Werkzeugmaschine (10) mit Kühlschmierstoffen verwendet werden.

19. Verfahren nach Anspruch 18,
- **dadurch gekennzeichnet, dass**
- die durch Rotation erhaltenen Kühlschmierstoffbestandteile in einem Schmierstoffspeicher (20) zwischengespeichert werden.

20. Verfahren nach Anspruch 19,
- **dadurch gekennzeichnet, dass**
- Kühlschmierstoffe über eine Rückleitung (24) von der Werkzeugmaschine (10) in den Zwischenspeicher (20) geleitet werden.

## Claims

1. Apparatus for the separation of aerosol-containing gas mixtures coming from a machine tool (10) operable with cooling lubricants, the machine tool (10) being provided with a housing (12),
- with a first return line (42) for cooling lubricants separated from the gas mixture,
- and with a blower wheel (30) for gases which is surrounded by a casing (28) and which possesses blades (78),
- **characterized in that**
- the gas mixture present in the inner space (34) surrounded by the housing (12) can be sucked in by means of the blower wheel (30),
- at least one element (92) consisting of a plurality of reciprocally movable members is present in the volume flow generated by the blower wheel,
- this at least one element (92) can be driven rotatably about the axis of rotation (48) of the blower wheel,
- a second return line (38) for the gas flow leaving the casing (28) is present between the casing (28) and the inner space (34).

2. Apparatus according to Claim 1,
- **characterized in that**
- the casing (28) projects with a suction intake connection piece (32) for the gas mixture into the inner space (34).

3. Apparatus according to Claim 1 or 2,
- **characterized in that**
- the first return line (42) issues into a lubricant store (20), out of which the machine tool (10) present in the housing (12) can be supplied with cooling lubricants.

4. Apparatus according to Claim 3,
- **characterized in that**
- the first return line (42) is present outside the housing (12).

5. Apparatus according to one of the preceding claims,
- **characterized in that**
- the second return line (38) ends at the machine tool (10) present in the housing (12).

6. Apparatus according to Claim 5,
- **characterized in that**
- the second return line (38) is present inside the housing (12).

7. Apparatus according to one of the preceding claims,
- **characterized in that**
- the drive motor (74) for the blower wheel is present outside the housing (12).

8. Apparatus according to one of the preceding claims,
- **characterized in that**
- the blower wheel with its blades (78) is designed in the manner of a radial fan,
- elements (92) are fastened to the blades (78) and/or to the carrying disc (77) and/or to the cover disc (80), between which two discs (77, 80) the blades (78) are present.

9. Apparatus according to one of the preceding claims,
- **characterized in that**
- elements (92) are fastened to the outer circumferential margin of the carrying disc (77) and/or to the outer circumferential margin of the cover disc (80).

10. Apparatus according to one of the preceding claims,
- **characterized in that**
- the elements (92) are present, distributed, particularly uniformly distributed, in the circumferential direction of rotation.

11. Apparatus according to one of the preceding claims,
- **characterized in that**
- the elements (92) are suspended in an articulated manner.

12. Apparatus according to one of the preceding claims,
- **characterized in that**
- elements (92) consist in each case of a plurality of members suspended one on the other with mutual movability in the manner of chain pieces.

13. Apparatus according to one of the preceding claims,
- **characterized in that**
- the elements (92) are arranged in the form of one or more rings (93, 95, 97), each ring consisting of a plurality of elements (92).

14. Apparatus according to one of the preceding claims,
- **characterized in that**
- at least one element (92) consists of flat lugs (130) which are suspended one in the other and which, in relation to their surface extent, are present, rotated through 90° (old degrees) with respect to the lugs (130) in each case adjacent.

15. Apparatus according to one of the preceding claims,
- **characterized in that**
- a line pipe (132) projects into the suction intake connection piece (32) from outside,
- cooling lubricants or other fluids can be introduced into the blower wheel (30) through the line pipe (132).

16. Apparatus according to Claim 15,
- **characterized in that**
- the line pipe (132) is connected to the store (20) for cooling lubricants.

17. Method for the separation of aerosol-containing gas mixtures coming from a machine tool (10) operated with cooling lubricants, which method is carried out by means of the apparatus according to Claim 1, the machine tool (10) being provided with a housing (12), and the gas mixture located in the inner space (34) of the housing (12) being sucked in,
- **characterized in that**
- this sucked-in gas mixture is introduced into a rotating gas roller (100), so that the cooling-lubricant constituents are thereby separated from the gas constituents of the sucked-in gas mixture,
- these gas constituents are recirculated into the region of the machine tool (10).

18. Method according to Claim 17,
- **characterized in that**
- the cooling-lubricant constituents obtained by rotation are reused for supplying the machine tool (10) with cooling lubricants.

19. Method according to Claim 18,
- **characterized in that**
- the cooling-lubricant constituents obtained by rotation are intermediately stored in a lubricant store (20).

20. Method according to Claim 19,
- **characterized in that**
- cooling lubricants are conducted from the machine tool (10) into the intermediate store (20) via a return line (24).

## Revendications

1. Dispositif de séparation de mélanges gazeux renfermant des aérosols et provenant d'une machine-outil (10) exploitable avec utilisation d'agents lubrifiants de refroidissement, ladite machine-outil (10) étant pourvue d'un carénage enveloppant (12), comprenant
- un premier conduit de retour (42) affecté à des agents lubrifiants de refroidissement séparés d'avec le mélange gazeux,
- et une roue de soufflerie (30) entourée par un carter (28), dédiée à des gaz et munie de pales (78),
- **caractérisé par le fait**
- **que** le mélange gazeux, présent dans l'espace interne (34) confiné par le carénage enveloppant (12), peut être aspiré à travers la roue de soufflerie (30),
- **qu'**au moins un élément (92), composé de plusieurs organes à mobilité réciproque, est présent dans le flux volumique généré par la roue de soufflerie,
- **que** cet élément (92), prévu au minimum, peut être mené en rotation autour de l'axe de rotation (48) de la roue de soufflerie,
- **qu'**un second conduit de retour (38), affecté à l'écoulement gazeux quittant le carter (28), est présent entre ledit carter (28) et ledit espace interne (34).

2. Dispositif selon la revendication 1,
- **caractérisé par le fait**
- **que** le carter (28) s'engage dans l'espace interne (34) par un embout d'aspiration (32) destiné au mélange gazeux.

3. Dispositif selon la revendication 1 ou 2,
- **caractérisé par le fait**
- **que** le premier conduit de retour (42) débouche dans un accumulateur de lubrifiants (20) à partir duquel la machine-outil (10), présente dans le carénage enveloppant (12), peut être alimentée en agents lubrifiants de refroidissement.

4. Dispositif selon la revendication 3,
- **caractérisé par le fait**
- **que** le premier conduit de retour (42) est présent en dehors du carénage enveloppant (12).

5. Dispositif selon l'une des revendications précédentes,
- **caractérisé par le fait**
- **que** le second conduit de retour (38) s'achève au niveau de la machine-outil (10) présente dans le carénage enveloppant (12).

6. Dispositif selon la revendication 5,
- **caractérisé par le fait**
- **que** le second conduit de retour (38) est présent à l'intérieur du carénage enveloppant (12).

7. Dispositif selon l'une des revendications précédentes,
- **caractérisé par le fait**
- **que** le moteur d'entraînement (74), dédié à la roue de soufflerie, est présent en dehors du carénage enveloppant (12).

8. Dispositif selon l'une des revendications précédentes,
- **caractérisé par le fait**
- **que** la roue de soufflerie est réalisée, avec ses pales (78), à la manière d'un ventilateur radial,
- **que** des éléments (92) sont fixés auxdites pales (78) et/ou au disque de support (77) et/ou au disque de recouvrement (80), lesdites pales (78) étant présentes entre les deux disques (77, 80) précités.

9. Dispositif selon l'une des revendications précédentes,
- **caractérisé par le fait**
- **que** des éléments (92) sont fixés au bord périphérique extérieur du disque de support (77) et/ou au bord périphérique extérieur du disque de recouvrement (80).

10. Dispositif selon l'une des revendications précédentes,
- **caractérisé par le fait**
- **que** les éléments (92) sont présents avec répartition dans la direction circonférentielle de rotation, notamment avec répartition uniforme.

11. Dispositif selon l'une des revendications précédentes,
- **caractérisé par le fait**
- **que** les éléments (92) sont suspendus de manière articulée.

12. Dispositif selon l'une des revendications précédentes,
- **caractérisé par le fait**
- **que** des éléments (92) sont respectivement composés de plusieurs organes suspendus les uns aux autres avec mobilité réciproque, à la manière de maillons de chaînes.

13. Dispositif selon l'une des revendications précédentes,
- **caractérisé par le fait**
- **que** les éléments (92) sont agencés en une ou plusieurs couronne(s) (93, 95, 97), chaque couronne étant composée de plusieurs éléments (92).

14. Dispositif selon l'une des revendications précédentes,
- **caractérisé par le fait**
- **qu'**au moins un élément (92) est constitué d'oeillets aplatis (130) qui sont imbriqués les uns dans les autres et qui, vis-à-vis de leur étendue superficielle, sont présents avec décalage de 90° (degrés) vis-à-vis des oeillets (130) respectivement voisins.

15. Dispositif selon l'une des revendications précédentes,
- **caractérisé par le fait**
- **qu'**une tubulure de canalisation (132) s'engage, depuis l'extérieur, dans l'embout d'aspiration (32),
- **que** des agents lubrifiants de refroidissement, ou fluides de types autres, peuvent être introduits dans la roue de soufflerie (30) par l'intermédiaire de ladite tubulure de canalisation (132).

16. Dispositif selon la revendication 15,
- **caractérisé par le fait**
- **que** la tubulure de canalisation (132) est reliée à l'accumulateur (20) dédié à des agents lubrifiants de refroidissement.

17. Procédé mis en oeuvre à l'aide du dispositif selon la revendication 1, destiné à la séparation de mélanges gazeux renfermant des aérosols et provenant d'une machine-outil (10) exploitable avec utilisation d'agents lubrifiants de refroidissement, ladite machine-outil (10) étant pourvue d'un carénage enveloppant (12) et le mélange gazeux, situé dans l'espace interne (34) dudit carénage enveloppant (12), étant soumis à aspiration,
- **caractérisé par le fait**
- **que** ce mélange gazeux aspiré est introduit dans un cylindre rotatif (100) à gaz, de sorte que les composants d'agents lubrifiants de refroidissement sont ainsi séparés d'avec les composants gazeux dudit mélange gazeux aspiré,
- ces composants gazeux sont renvoyés jusque dans la région de la machine-outil (10).

18. Procédé selon la revendication 17,
- **caractérisé par le fait**
- **que** les composants d'agents lubrifiants de refroidissement, obtenus par rotation, sont réutilisés en vue de l'alimentation de la machine-outil (10) en agents lubrifiants de refroidissement.

19. Procédé selon la revendication 18,
- **caractérisé par le fait**
- **que** les composants d'agents lubrifiants de refroidissement, obtenus par rotation, font l'objet d'un stockage intermédiaire dans un accumulateur de lubrifiants (20).

20. Procédé selon la revendication 19,
- **caractérisé par le fait**
- **que** des agents lubrifiants de refroidissement sont guidés depuis la machine-outil (10) jusque dans l'accumulateur intermédiaire (20), en empruntant un conduit de retour (24).
